# FASCICULE DE BREVET EUROPEEN

(11) **EP 3 729 307 B1**
(45) Date de publication et mention de la délivrance du brevet: **21.12.2022**
(21) Numéro de dépôt: 18825747.1
(22) Date de dépôt: 19.11.2018
(51) Int. Cl.: G06F 21/31

(54) **PROCÉDÉS ET DISPOSITIFS POUR L'ENRÔLEMENT ET L'AUTHENTIFICATION D'UN UTILISATEUR AUPRÈS D'UN SERVICE**
VERFAHREN UND VORRICHTUNGEN ZUR ANMELDUNG UND AUTHENTIFIZIEREN EINES BENUTZERS BEI EINEM DIENST
METHODS AND DEVICES FOR ENROLLING AND AUTHENTICATING A USER WITH A SERVICE

(30) Priorité: 24.11.2017 FR 1761152
(43) Date de publication de la demande: 28.10.2020
(73) Titulaire: Hiasecure, 75017 Paris (FR)
(72) Inventeur: OLIVIER, Arnaud, Hong Kong (HK)
(74) Mandataire: Santarelli
(86) Numéro de dépôt international: PCT/FR2018/052902
(87) Numéro de publication internationale: WO 2019/102120

(56) Documents cités:
- WO-A1-2017/193165
- US-A1- 2014 115 670

## Description

La présente invention concerne le domaine des procédés d'enrôlement et d'authentification et des dispositifs permettant de les mettre en œuvre. Ces procédés sont typiquement utilisés entre un fournisseur de services et un utilisateur désirant accéder au service. L'utilisation la plus courante est l'accès à un service mis en œuvre par un serveur et accessible à un utilisateur au travers d'un réseau de données, par exemple le réseau Internet, depuis un terminal de l'utilisateur connecté à ce réseau.

Une première famille de procédés d'authentification est basée sur l'utilisation d'un secret partagé entre l'utilisateur et le fournisseur de service. L'exemple le plus courant est le bien connu mot de passe. Un utilisateur créé un compte sur le service et définit à ce moment son mot de passe. On parle d'une phase d'enrôlement. Lors de l'accès au service, il fournit son identité (*login* en anglais) et le mot de passe associé. Le service vérifie alors que le mot de passe correspond au mot de passe enregistré par le service lors de la phase d'enrôlement.

Cette famille de procédés possède des limites bien connues. Il est possible à un attaquant de déterminer le mot de passe de différentes manières. Par exemple l'attaquant peut espionner les communications et capturer le mot de passe pour ensuite pouvoir usurper l'identité de l'utilisateur auprès du service. Le chiffrement des échanges permet, dans une certaine mesure, de lutter contre ces attaques. Il est également possible de deviner le mot de passe, soit par l'utilisation de données personnelles liées à l'utilisateur, technique connue sous le nom d'ingénierie sociale, sa date de naissance, le nom de son animal familier ou autres, soit par l'utilisation de dictionnaires de mots de passe. Il est également possible d'espionner l'utilisateur au moment où il entre son mot de passe dans son terminal à l'aide d'une caméra par exemple ou encore par l'utilisation de logiciels espion enregistrant l'utilisation des touches du clavier du terminal.

Des techniques de challenge-réponse sont également connues. Certaines permettent de lutter contre l'espionnage de l'échange du secret entre l'utilisateur et le service en évitant la transmission du secret. L'idée est ici que le service génère un challenge aléatoire qu'il envoie à l'utilisateur. L'utilisateur génère une réponse par l'application d'une fonction au challenge, cette fonction utilisant le secret partagé. Par exemple, il peut s'agir du chiffrement du challenge, le secret étant utilisé comme clé de chiffrement. Le service est en mesure d'effectuer le même calcul et de vérifier que la réponse de l'utilisateur correspond au chiffrement du challenge par le secret partagé. Si ces procédés permettent effectivement de supprimer l'accès au secret partagé par espionnage des communications entre le terminal et le serveur hébergeant le service, le secret n'étant plus transmis, ils ne sont d'aucune utilité contre l'ingénierie sociale, les dictionnaires de mots de passe ou encore l'espionnage du terminal de l'utilisateur.

Une seconde famille de procédés d'authentification est basée sur une propriété intrinsèque de l'utilisateur. On classe dans cette catégorie tous les procédés biométriques comme la reconnaissance d'iris, des empreintes digitales, du réseau veineux, de la voix, etc... Ces techniques ont un certain niveau de fiabilité mais elles imposent généralement de doter le terminal de l'utilisateur d'un dispositif de reconnaissance adapté à la technologie choisie et sont donc onéreuses.

Une troisième famille de procédés d'authentification est basée sur la possession d'un objet, on authentifie ici le porteur de l'objet. On classe, de manière anecdotique en ce qui nous concerne, dans cette catégorie le système clés/serrure où l'accès est autorisé au porteur de la clé correspondant à la serrure. Les systèmes informatiques modernes sont basés, par exemple, sur la possession d'un téléphone auquel le service envoie un code que l'utilisateur doit entrer dans son terminal. On s'assure ainsi que l'utilisateur est en possession du téléphone préenregistré par le service. Il peut également s'agir d'un dispositif de génération pseudo-aléatoire d'un code comme dans les systèmes connus sous le nom de générateurs de jetons d'authentification à usage unique (*token based autentication* en anglais). Dans ces systèmes, un générateur de jetons est utilisé par l'utilisateur qui déclenche la génération du jeton à la demande lorsqu'il veut s'authentifier. Il fournit alors le jeton demandé au service. Le service génère à l'aide d'un algorithme identique le jeton correspondant et vérifie la concordance du jeton reçu avec le jeton demandé. Ces jetons sont à usage unique et ne permettent donc pas de rejouer la séquence d'authentification s'ils sont interceptés lors de la transmission. La concordance des jetons assure que l'utilisateur est bien porteur du générateur de jetons enregistré. Chaque générateur de jeton étant programmé pour générer une suite unique de jetons. La carte bancaire de l'utilisateur peut également être utilisée comme objet dont on vérifie que l'utilisateur est porteur. C'est le cas, par exemple, lorsqu'un service vous demande la carte ayant servie à l'achat d'un billet de train ou de spectacle pour vous délivrer votre billet. La principale attaque possible de ces procédés est le vol de l'objet dont l'utilisateur est le porteur. Le document (WO 2017/193165 A1) décrit une méthode d'authentification selon laquelle le secret partagé entre l'utilisateur et le système est constitué d'un ensemble secret d'élément cognitifs, par exemple un ensemble secret d'images.

Aucun de ces procédés n'est aujourd'hui exempt de défaut. Leur fiabilité n'est pas parfaite. Leur mise en œuvre et leur gestion peut se révéler complexe et/ou onéreuse comme dans le cas de la biométrie.

La présente invention a pour but de résoudre les inconvénients précités en proposant un procédé d'authentification original. Le procédé d'authentification proposé est basé sur une convention secrète entre le service et l'utilisateur. Cette convention est définie sur la base d'un choix aléatoire de briques algorithmiques élémentaires au sein d'une collection de briques élémentaires lors de la phase d'enrôlement de l'utilisateur. Lors de l'authentification, l'utilisateur utilise la convention en l'appliquant à un challenge présenté par le service pour déterminer une réponse. Les briques algorithmiques sont choisies pour pouvoir être mémorisables par l'utilisateur. Du fait de la diversité de ces briques et de la combinatoire à l'origine des conventions, le nombre de conventions possibles est très grand ce qui rend virtuellement impossible à un attaquant de deviner la convention. D'autre part, l'utilisateur utilise la convention mémorisée sans devoir la saisir sur son terminal, seul le résultat de l'application de la convention au challenge est entré dans le terminal. De ce fait toutes les techniques d'espionnage du terminal sont inopérantes. Il est virtuellement impossible de remonter à la convention par la capture du challenge et de la réponse. Le système est donc extrêmement sûr et simple à mettre en place.

La présente invention est définie par les revendications indépendantes ci-jointes.

L'invention concerne un procédé d'enrôlement d'un utilisateur auprès d'un service, par un module d'authentification exécuté sur un serveur, caractérisé en ce qu'il comprend les étapes suivantes :
- détermination d'une convention permettant le calcul d'une réponse à partir d'un challenge par sélection aléatoire d'une pluralité de briques algorithmiques de base dans un ensemble de briques algorithmiques de base ;
- transmission de la convention à destination d'un terminal de l'utilisateur pour présentation à l'utilisateur ;
- enregistrement de la convention associée à un identifiant de l'utilisateur, la dite convention constituant un secret partagé entre l'utilisateur et le module d'authentification.

Selon un mode particulier de réalisation, le procédé comprend en outre une étape d'adaptation de la convention.

Selon un mode particulier de réalisation, l'étape d'adaptation comprend une étape de :
- simplification de la convention initialement déterminée par réduction du nombre de briques algorithmiques de base.

Selon un mode particulier de réalisation, l'étape d'adaptation comprend une étape de :
- complexification de la convention initialement déterminée par augmentation du nombre de briques algorithmiques de base.

Selon un mode particulier de réalisation, l'étape de simplification ou de complexification comprend la sélection aléatoire de briques algorithmiques de base à retirer, respectivement ajouter, à la convention.

Selon un mode particulier de réalisation, l'étape de simplification ou de complexification comprend la réception d'une sélection par l'utilisateur de briques algorithmiques de base à retirer, respectivement ajouter, à la convention.

Selon un mode particulier de réalisation, le procédé comporte en outre au moins une étape de test de la convention déterminée.

Selon un mode particulier de réalisation, l'étape de test comprend les étapes suivantes :
- génération d'un challenge compatible avec la convention ;
- transmission du challenge à destination d'un terminal de l'utilisateur ;
- réception d'une réponse au challenge reçue du terminal de l'utilisateur ;
- comparaison de la réponse reçue par rapport à une réponse calculée en appliquant la convention au challenge généré.

Selon un mode particulier de réalisation, le procédé comprend en outre une étape de :
- simplification de la convention suite à un ou plusieurs échecs de l'étape de test.

Selon un mode particulier de réalisation, le procédé comprend en outre une étape de :
- détermination d'une nouvelle convention suite à un ou plusieurs échecs de l'étape de test.

Selon un mode particulier de réalisation, les briques algorithmiques de base comprennent une première forme intelligible pour l'utilisateur et une seconde forme correspondant à un code exécutable par un dispositif de traitement de l'information.

Selon un mode particulier de réalisation, la convention enregistrée associée à un utilisateur est également associée à un identifiant de service.

L'invention concerne également un procédé d'authentification d'un utilisateur auprès d'un service, par un module d'authentification exécuté sur un serveur, caractérisé en ce qu'il comprend les étapes suivantes :
- obtention d'une convention associée à l'utilisateur permettant le calcul d'une réponse à partir d'un challenge par sélection aléatoire d'une pluralité de briques algorithmiques de base dans un ensemble de briques algorithmiques de base, ladite convention constituant un secret partagé entre l'utilisateur et le module d'authentification ;
- génération d'un challenge compatible avec la convention ;
- transmission du challenge à destination d'un terminal de l'utilisateur ;
- réception d'une réponse au challenge reçue du terminal de l'utilisateur ;
- comparaison de la réponse reçue par rapport à une réponse calculée en appliquant la convention au challenge généré.

Selon un mode particulier de réalisation, le challenge généré est différent de tous les challenges précédemment générés pour le même utilisateur.

Selon un mode particulier de réalisation, le challenge est transmis directement au terminal de l'utilisateur.

Selon un mode particulier de réalisation, le challenge est transmis à un service servant de relai entre le serveur et le terminal de l'utilisateur.

L'invention concerne également un dispositif de traitement de l'information caractérisé en ce qu'il comporte un processeur configuré pour exécuter un procédé d'enrôlement selon l'invention.

L'invention concerne également un dispositif de traitement de l'information caractérisé en ce qu'il comporte un processeur configuré pour exécuter un procédé d'authentification selon l'invention.

L'invention concerne également un programme d'ordinateur comprenant des instructions adaptées à la mise en œuvre de chacune des étapes du procédé selon l'invention lorsque ledit programme est exécuté sur un ordinateur.

L'invention concerne également un moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'invention.

D'autres particularités et avantages de l'invention apparaîtront encore dans la description ci-après, en relation avec les dessins annexés, donnés à titre d'exemples non limitatifs suivants :
- la **Figure 1** illustre un premier exemple de système permettant la mise en œuvre de l'invention ;
- la **Figure 2** illustre un second exemple de système permettant la mise en œuvre de l'invention ;
- la **Figure 3** illustre un module d'authentification selon un exemple de réalisation de l'invention ;
- la **Figure 4** illustre un procédé d'enrôlement selon un mode de réalisation de l'invention ;
- la **Figure 5** illustre une procédure d'authentification dans un mode de réalisation de l'invention ;
- la **Figure 6** est un bloc-diagramme schématique d'un dispositif de traitement de l'information pour la mise en œuvre d'un ou plusieurs modes de réalisation de l'invention.

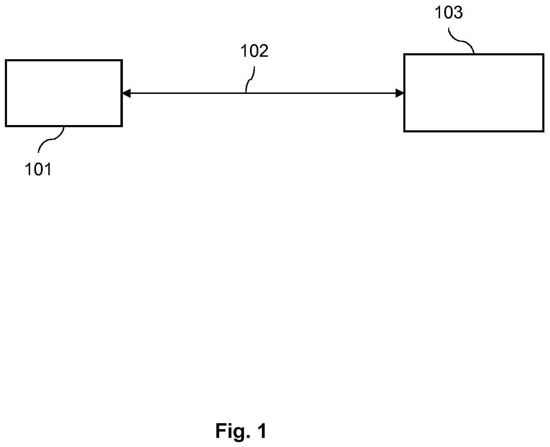

La **Figure 1** illustre un premier exemple de système permettant la mise en œuvre de l'invention. Dans ce système, un terminal **101** permet à un utilisateur de se connecter à un service **103** hébergé par un ou plusieurs serveurs. Le terminal **101** est connecté au service **103** par un réseau de communication de données, typiquement le réseau Internet. La connexion entre le terminal **101** et le service **103** utilisant le réseau de communication permet l'échange de messages **102** entre le terminal et le service **103.** Ces échanges de messages suivent un protocole d'échange, il peut s'agir typiquement du protocole HTTP (*Hyper Text Transport Protocol* en anglais) utilisé par les services Web, mais tout autre protocole peut également être utilisé.

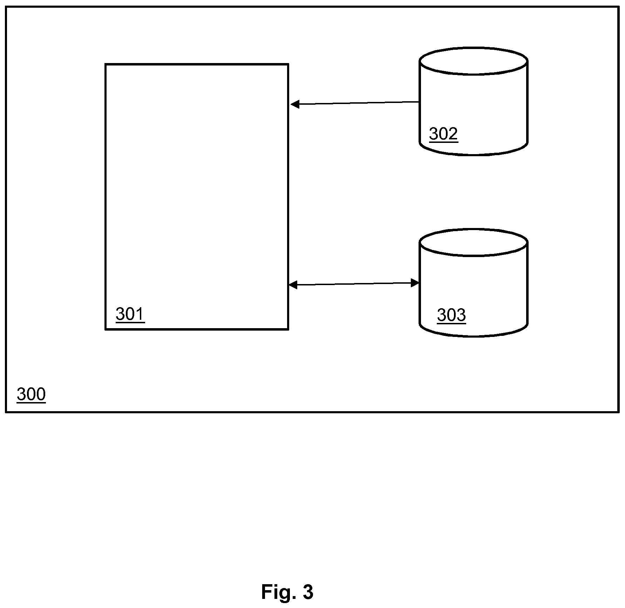

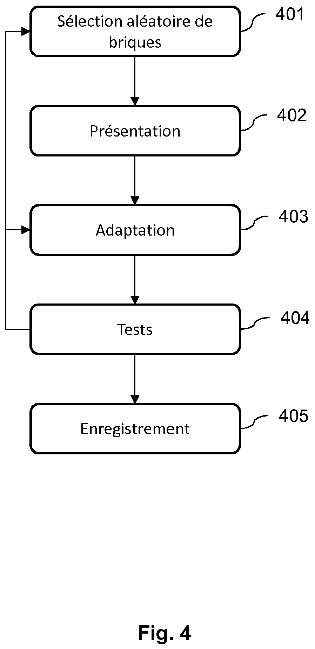

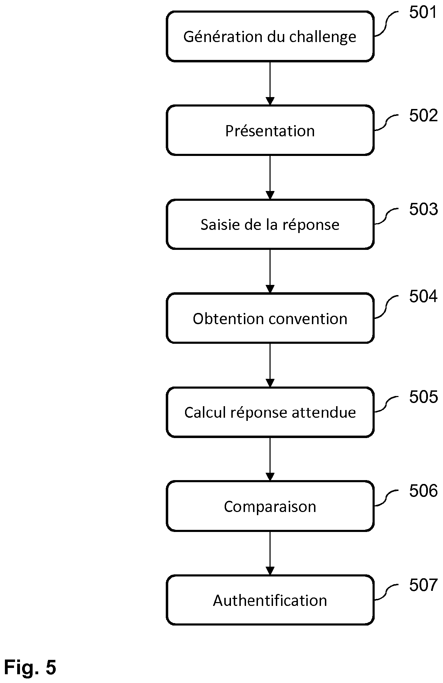

Le service **103** héberge un module d'authentification, comme par exemple le module d'authentification illustré par la **Figure 3****.** Ce module d'authentification permet la mise en œuvre d'un procédé d'enrôlement permettant à un utilisateur du terminal **101** de s'enregistrer auprès du service **103.** Un exemple d'un tel procédé d'enrôlement est illustré par la **Figure 4****.** Le module d'authentification permet également la mise en œuvre d'un procédé d'authentification d'un utilisateur du terminal **101** préalablement enrôlé auprès du service **103**. La **Figure 5** illustre un exemple d'un tel procédé d'authentification.

Le terminal **101** peut être un ordinateur personnel, une tablette informatique, un terminal de téléphonie mobile ou tout type de terminal connecté à un réseau de communication de données. Le service **103** est typiquement misen-œuvre sur un ou plusieurs serveurs. Ces serveurs peuvent être opérés directement par le fournisseur de service où par un tiers au sein d'un centre server (*data center* en anglais).

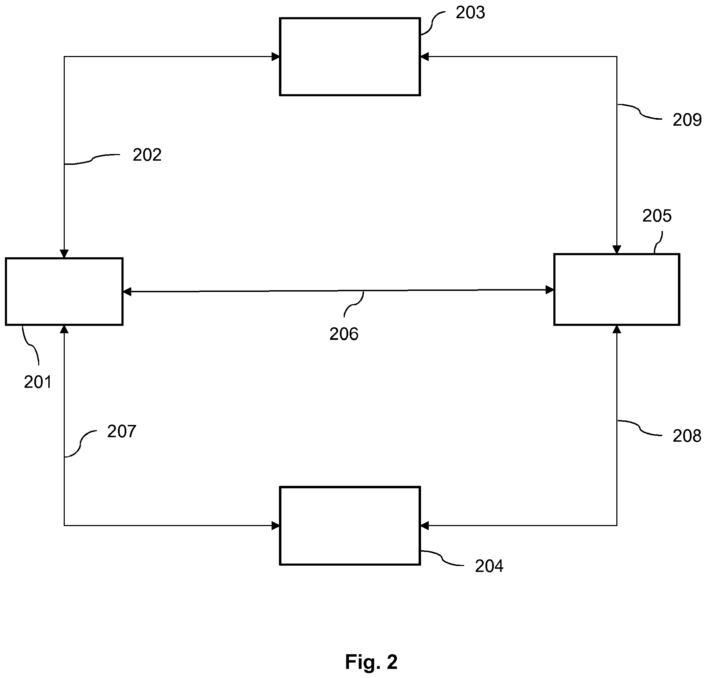

La **Figure 2** illustre un second exemple de système permettant la mise en œuvre de l'invention. Dans ce second exemple, le terminal **201** permet à un utilisateur de se connecter à plusieurs services dont les deux services représentés **203** et **204.** Les procédures d'enrôlement et d'authentification sont prises en charge par un serveur d'authentification **205.** Ce serveur d'authentification est typiquement contrôlé par un tiers d'authentification auquel les fournisseurs de services contrôlant les service **203** et **204** ont sous-traité l'authentification.

Deux modes de fonctionnements peuvent être envisagés. Dans un premier mode de fonctionnement, dit fonctionnement par relai (*proxy* en anglais), le terminal **201** ne communique qu'avec les services **203** et **204,** ce sont les échanges **202** et **207.** Les opérations d'enrôlement et d'authentification sont alors sous-traitées par les services **203** et **204** au serveur d'authentification **205** par les échanges **208** et **209.** Dans ce mode de fonctionnement, il n'y a jamais d'échanges directs **206** entre le terminal **201** et le serveur d'authentification **205.** Dans ce mode de fonctionnement, le service intervient comme un relai entre le terminal et le serveur d'authentification.

Dans un second mode de fonctionnement, dit fonctionnement direct, le service **203** ou **204** qui reçoit une requête en enrôlement ou en authentification d'un terminal utilisateur **201** initie l'opération correspondante auprès du serveur d'authentification **205.** Ensuite, le serveur d'authentification **205** effectue l'opération d'enrôlement ou d'authentification par des échanges directs **206** avec le terminal **201** et notifie le résultat de l'opération au service **203** ou **204.** Une fois l'enrôlement ou l'authentification effectués, les interactions normales entre le terminal **201** et le service **203** ou **204** peuvent reprendre.

Le système illustré par la **Figure 2** fonctionne avec deux services **203** et **204,** mais il peut s'étendre de manière similaire à un nombre quelconque de services. Les deux modes de fonctionnement décrits peuvent également être mixés en fonction des services. Certains services peuvent mettre en place un fonctionnement par relais tandis que d'autres services utilisent le fonctionnement direct.

Dans le système de la **Figure 2****,** le module d'authentification dont un exemple est illustré par la **Figure 3** est mis en œuvre par le serveur d'authentification.

La **Figure 3** illustre un module d'authentification **300** selon un exemple de réalisation de l'invention.

Selon un aspect de l'invention, l'authentification est basée sur un secret partagé entre l'utilisateur et le module d'authentification. Contrairement à l'art antérieur, le secret partagé n'est pas une information statique, telle qu'un mot de passe, mais une convention. On entend par convention dans ce document un algorithme permettant de calculer une réponse à partir d'un challenge. Le challenge peut prendre un nombre non limité de formes. Selon un exemple de réalisation, le challenge consiste en une liste de chiffres. Mais, le challenge peut être basé sur des images, des couleurs, des symboles ou tout autre donnée pouvant être interprétée par un humain.

En effet, l'utilisateur doit mémoriser la convention, c'est-à-dire l'algorithme à appliquer au challenge. Cet algorithme est composé d'un ensemble d'opérations élémentaires, on parle de briques algorithmiques de base. Comme le challenge est interprété par un humain pour y appliquer la convention mémorisée, on peut imaginer de multiples formes de communication du challenge. Si l'on reprend l'exemple de la suite de chiffres, cette suite peut être communiquées sous la forme brute d'une suite de chiffres, mais aussi sous la forme d'une image qui comprend une suite de chiffres, sous la forme d'une suite d'images, chacune représentant un chiffre, d'une suite de symboles, chaque symbole étant associé à un chiffre ou encore tout autre moyen, la seule limite étant que l'utilisateur doit pouvoir identifier une suite de chiffres à partir du challenge qui lui est transmis.

Selon certains modes de réalisation, différentes familles de challenge sont définies. Une première famille peut reprendre l'exemple des suites de chiffres. Une autre famille peut être basée sur des formes géométriques. Une autre famille peut être basées sur des couleurs, des images, des notes de musiques etc ... Si le système est basé sur plusieurs familles de challenges, les briques algorithmiques permettant de définir les conventions seront également classées dans des familles correspondantes en fonction de la famille de challenge qu'elles sont capables de manipuler.

Le procédé d'enrôlement comprend l'opération de définition d'une convention qui sera mémorisée par l'utilisateur et stockée par le module d'authentification. Cette opération peut comprendre la définition de la famille de challenge correspondante lorsque le système comprend plusieurs familles de challenges.

Le procédé d'authentification comprendra l'opération de choisir, de préférence aléatoirement, un challenge à présenter à l'utilisateur. L'utilisateur applique alors la convention qu'il a mémorisée au challenge qui lui est présenté pour calculer une réponse. Cette réponse est transmise au module d'authentification. Ce dernier, qui possède également la convention définie pour cet utilisateur, calcule de son côté la réponse attendue. L'authentification réussie lorsque la réponse produite par l'utilisateur correspond à la réponse attendue telle que calculée par le module d'authentification sur la base de la convention stockée par le module.

L'un des avantages du procédé d'authentification ainsi décrit est que le secret partagé, donc la convention, n'est jamais entrée par l'utilisateur dans son terminal au contraire d'un mot de passe. Il n'est donc pas possible à un attaquant d'obtenir le secret par des techniques d'espionnage du terminal.

Un autre avantage du procédé d'authentification ainsi décrit est que le nombre de conventions possibles augmente exponentiellement avec le nombre de briques algorithmiques de base utilisées pour définir les conventions. Ce nombre augmente également avec le nombre de briques de base utilisées pour définir une convention donnée. La limite à ce dernier nombre étant la faculté de l'utilisateur à mémoriser un grand nombre d'étapes constituant la convention.

Le module d'authentification **300** de l'exemple de la **Figure 3** comprend une première base de données **302** qui comprend les briques algorithmiques de base. Ces briques algorithmiques de base peuvent être assemblées en un nombre quelconque de briques constituant un algorithme, c'est-à-dire une convention.

Avantageusement, les briques algorithmiques de base sont présentes dans la base de données sous deux formes différentes. Une première forme est un texte décrivant l'opération de manière compréhensible par un utilisateur. C'est la forme qui sera utilisée pour générer la version présentée à l'utilisateur. Une seconde forme correspond à un code informatique implémentant l'opération exécutable par un processeur informatique. Ce code peut, par exemple, prendre la forme d'une fonction informatique. Cette seconde forme de la brique algorithmique de base est destinée à être utilisée par le module d'authentification pour générer la version exécutable de la convention lui permettant de calculer la réponse à partir du challenge.

Le module d'authentification **300** comprend également une seconde base de données **303** des utilisateurs pour stocker les conventions définies lors de la phase d'enrôlement. Une convention stockée dans la base de données **303** est donc associée à un utilisateur. Si le système permet de gérer plusieurs services, comme dans le système selon la **Figure 2** par exemple, la convention peut être associée à un utilisateur et à un service. Dans ce cas, un même utilisateur sera associé à plusieurs conventions, une convention par service géré par le module d'authentification.

Le module d'authentification **300** comprend également un module de contrôle **301** en charge de l'exécution des procédures d'enrôlement et d'authentification d'un utilisateur pour un service. C'est également ce module de contrôle qui gère les communications avec le terminal de l'utilisateur et/ou les services selon les modes de mise en œuvre du système.

Le module d'authentification **300** peut être compris dans un serveur d'authentification tel que le serveur **205** de la **Figure 2** dans un système où l'authentification est sous-traitée à un tiers d'authentification. Il peut être également directement compris dans un service comme le service **103** dans un système ne sous-traitant pas l'authentification.

La **Figure 4** illustre un procédé d'enrôlement selon un mode de réalisation de l'invention. Ce procédé peut, par exemple, être mis en œuvre par le module de contrôle **301** du module d'authentification de la **Figure 3****.**

Dans une première étape **401,** une convention initiale est construite par un tirage aléatoire de briques algorithmiques de base dans la base de données des briques algorithmiques de base. Lorsque le système gère plusieurs familles de challenges, une famille de challenge est également choisie, typiquement aléatoirement, et la sélection des briques de base s'opère dans un sous-ensemble de briques compatibles avec le traitement des challenges de la famille choisie.

A l'issue de cette étape, une convention initiale est obtenue, c'est-à-dire un algorithme composé d'une succession d'étapes, les briques algorithmiques de base, permettant de transformer un challenge en une réponse.

Les briques algorithmiques de base sont typiquement des opérations élémentaires sur les données constituant les challenges. Toutefois, elles peuvent avantageusement également utiliser des informations contextuelles associées à l'utilisateur. Ces informations contextuelles peuvent concerner la localisation de l'utilisateur à l'aide de données de géolocalisation. Par exemple, le fait que l'utilisateur soit présent dans son pays d'origine ou pas. Elles peuvent également concerner le terminal utilisé, un mobile ou un ordinateur par exemple. Elles peuvent encore concerner une donnée associée à la transaction nécessitant l'authentification, par exemple le montant de la transaction. Elles peuvent aussi concerner l'heure courante ou encore se référer à une information liée à une transaction passée, donc à un historique des transactions.

Dans l'exemple suivant, le challenge est du type suite de chiffres. Les briques algorithmiques de base comprennent par exemple les briques suivantes :
- Brique 1 : se positionner sur le chiffre numéro N ;
- Brique 2 : lire vers la droite ;
- Brique 3 : lire vers la gauche ;
- Brique 4 : lire N chiffres consécutifs ;
- Brique 5 : lire la valeur du chiffre et se déplacer du nombre correspondant de chiffres vers la droite ;
- Brique 6 : si je suis dans mon pays d'origine ;
- Brique 7 : si je ne suis pas dans mon pays d'origine ;
- Brique 8 : si la valeur du chiffre est paire ;
- Brique 9 : si la valeur du chiffre est impaire ;
- Brique 10 : répondre le résultat en cours.

Dans cet exemple, N représente un paramètre de la brique algorithmique de base. Un exemple de convention peut alors être composé des briques 7, 1(6), 3, 4(4), 10, 6, 1(1), 5, 2, 4(4), 10, le chiffre entre parenthèse est la valeur du paramètre N choisie.

Cette convention, traduite en langage clair peut se lire : Si je ne suis pas dans mon pays d'origine alors se positionner sur le 6^{e} chiffre, lire vers la gauche 4 chiffres consécutifs ; si je suis dans mon pays d'origine alors se positionner sur le premier chiffre, lire la valeur du chiffre et se déplacer du nombre correspondant vers la droite, lire vers la droite 4 chiffres consécutifs ; produire le résultat.

Si le challenge est le suivant : 374289245663, alors la réponse est pour une personne dans son pays d'origine : 2892 ; si la personne n'est pas dans son pays d'origine, la réponse est alors : 9824.

Lors de l'étape **402,** la convention initiale ainsi définie est transmise au terminal de l'utilisateur pour lui être présentée. Cette transmission peut être directe entre le module d'authentification et le terminal de l'utilisateur ou relayée par le service. L'utilisateur peut alors mémoriser la convention.

Il peut arriver que l'utilisateur éprouve des difficultés à mémoriser la convention ou qu'il souhaite renforcer la sécurité du procédé. Pour répondre à ces problèmes, selon des modes particuliers de réalisation de l'invention, une étape optionnelle **403** permet d'offrir à l'utilisateur d'adapter la convention initiale sélectionnée.

L'adaptation offerte comprend typiquement la possibilité de simplifier la convention pour en faciliter la mémorisation ou, au contraire, de la complexifier pour augmenter le niveau de sécurité désiré. Dans certains modes de réalisation, une seule de ces adaptations peut être proposée. Les adaptations peuvent être effectuées sous le contrôle de l'utilisateur ou sous le contrôle du module de contrôle.

Dans le premier cas, pour la simplification, l'utilisateur se voit offrir la possibilité de sélectionner une ou plusieurs briques algorithmiques de base pour les supprimer de la convention. La convention résultante est donc plus simple que la convention initiale. Avantageusement, le niveau de simplification peut être limité par le système pour éviter que la convention résultante soit trop simple, ce qui pourrait affaiblir la sécurité du système. Par exemple, un nombre minimum de briques algorithmiques de base peut être requis.

Pour complexifier la convention, l'utilisateur peut se voir offrir la possibilité de sélectionner une ou plusieurs briques algorithmiques de base parmi une liste pour les ajouter à la convention. La manipulation peut se faire, par exemple, en utilisant le glisser-déposer pour venir intercaler une nouvelle brique à l'endroit de son choix. Ainsi le nombre d'étapes algorithmiques de la convention augmente comme sa complexité. La possibilité de deviner la convention par l'observation du challenge et de la réponse diminue augmentant d'autant la sécurité de la solution.

Dans un autre mode de réalisation, les opérations de simplification ou de complexification sont faites sous le contrôle du module de contrôle. C'est alors ce module de contrôle qui sélectionne la ou les briques algorithmiques de base à supprimer de la convention pour la simplification. C'est encore lui qui sélectionne de nouvelles briques et les insère dans la convention pour sa complexification.

Une fois satisfait, l'utilisateur valide alors la convention résultante.

Il peut arriver qu'un utilisateur interprète mal la convention. Avantageusement, le procédé comprend une étape optionnelle **404** de test de la convention. Lors de cette étape, le module de contrôle génère un challenge, typiquement de manière aléatoire, et le soumet à l'utilisateur. Ce dernier utilise la convention pour calculer une réponse et soumet cette réponse au module de contrôle. Ce dernier applique la convention au challenge et produit sa version de la réponse résultant de l'application de la convention au challenge. Il vérifie alors que l'utilisateur a bien soumis la réponse attendue en fonction du challenge et de la convention. Ce test peut être conduit pour plusieurs challenges. Si l'utilisateur a bien soumis la réponse attendue, la convention est validée. Dans le cas contraire, ou en présence d'un taux d'erreur important si l'on fait plusieurs tests, on propose de repasser à une étape **403** d'adaptation de la convention. Dans certains modes de réalisation, par exemple si la simplification de la convention n'est pas souhaitable, on peut également reboucler sur l'étape **401** pour sélectionner une nouvelle convention initiale.

Une fois la convention validée, lors d'une étape **405,** la convention est enregistrée dans la base de données **303** associée à l'identifiant de l'utilisateur. Dans les systèmes où le module d'authentification gère l'authentification des utilisateurs pour plusieurs services, la convention stockée est associée à un utilisateur et au service concerné. La convention peut être stockée sous la forme d'un algorithme finalisé ou encore sous la forme d'une liste d'identifiants des briques algorithmiques de base constituant la convention et des éventuels paramètres de ces briques de base. La convention peut alors être déterminée en allant chercher les briques algorithmiques de base dans la base de données **302.**

Le procédé d'enrôlement est alors terminé.

La **Figure 5** illustre une procédure d'authentification dans un mode de réalisation de l'invention. Ce procédé d'authentification intervient typiquement lorsqu'un utilisateur, à l'aide de son terminal, souhaite se connecter à un service. Le terminal transmet au service l'identifiant de l'utilisateur. Cet identifiant peut correspondre à un identifiant entré par l'utilisateur, par exemple du type nom de l'utilisateur (*login* en anglais). Il peut encore s'agir d'un identifiant unique associé au terminal comme l'identifiant unique utilisé en téléphonie mobile et connu sous le nom de IMSI (*International Mobile Subscriber Identity* en anglais) qui permet d'identifier un utilisateur enregistré du réseau de téléphonie mobile. Cet identifiant est stocké dans la carte SIM (*Subscriber Identity Module* en anglais) du téléphone. Le service émet alors une requête en authentification auprès du module d'authentification comprenant l'identifiant de l'utilisateur. Avantageusement, la requête comprend également un identifiant de service associé au service qui émet la requête. Cet identifiant de service est par exemple utile lorsque l'authentification est sous-traitée à un tiers d'authentification qui gère l'authentification pour plusieurs services.

Lors d'une première étape **501,** le module de contrôle du module d'authentification génère un challenge pour l'utilisateur identifié par son identifiant. Le challenge généré doit être compatible avec la convention associée à l'utilisateur. En particulier, lorsque le système gère plusieurs familles de challenge, le module de contrôle doit vérifier dans la base des utilisateurs quelle famille de challenge est associée à l'utilisateur. Le challenge est typiquement généré aléatoirement. Avantageusement, le procédé de génération assure l'unicité des challenges. C'est-à-dire qu'il garantit qu'un challenge généré est toujours différent de tous les challenges précédemment générés pour ce même utilisateur.

Lors d'une étape **502,** le challenge généré est présenté à l'utilisateur. Dans un premier mode de réalisation, le service est utilisé comme relai pour transmettre le challenge. Le module d'authentification transmet le challenge au service qui retransmet le challenge au terminal de l'utilisateur pour son affichage. Dans un autre mode de réalisation, le module d'authentification initie une connexion directe avec le terminal de l'utilisateur pour la transmission directe du challenge. Par exemple, la transmission peut être faite sous la forme d'un message texte court du type SMS ou tout autre moyen de communication approprié.

Lors d'une étape **503,** l'utilisateur est invité à entrer la réponse correspondant au challenge à l'aide de la convention qu'il a mémorisé. L'utilisateur entre alors sa réponse sur le terminal qui la retransmet au module d'authentification, éventuellement via le service. Le calcul de la réponse est fait mentalement par l'utilisateur. La convention, qui correspond au secret de la méthode proposée, n'est jamais exprimée ni entrée dans le terminal, ce qui rend son observation impossible.

Lors d'une étape **504,** qui peut intervenir à tout moment dans le procédé décrit, l'ordre décrit des étapes n'étant pas impératif, le module de contrôle du module d'authentification obtient la convention associée à l'utilisateur. Typiquement, le module de contrôle retrouve dans la base de données des utilisateurs la convention associée à cet utilisateur. Lorsque plusieurs services sont gérés, le module de contrôle retrouve la convention associée à l'utilisateur et au service ayant initié la requête d'authentification. La convention peut être directement retrouvée dans la base de données des utilisateurs ou encore générée à partir des briques algorithmiques de base identifiées dans la base de données des utilisateurs et retrouvées dans la base de données des briques algorithmiques de base. Le module d'authentification génère alors la version exécutable de la convention.

Lors d'une étape **505,** le module de contrôle du module d'authentification applique la convention, dans sa version exécutable, au challenge pour déterminer une réponse attendue. Les paramètres associés à la convention et stockés dans la base de données des utilisateurs avec la convention sont utilisés dans le calcul. S'il y en a, les paramètres basés sur des informations contextuelles sont déterminé et utilisés lors de l'exécution de la convention. Ces données contextuelles, comme précédemment décrit, peuvent comprendre, l'heure courante, la localisation géographique de l'utilisateur, par exemple ou encore des informations liées à l'historique des transactions qui sont alors mémorisées, par exemple dans la base de données des utilisateurs.

Lors d'une étape **506,** la réponse attendue ainsi calculée et la réponse fournie par l'utilisateur sont comparées.

Lors de l'étape **507,** il est procédé à l'authentification proprement dite en fonction du résultat de la comparaison de l'étape **506.** Si les deux réponses correspondent, l'utilisateur est considéré comme authentifié. Si les deux réponses sont différentes, l'authentification échoue. Dans un mode de réalisation, l'utilisateur dont l'authentification échoue se voit proposer un nombre limité de nouvelles tentatives. Ces nouvelles tentatives peuvent être basées sur le challenge initial ou sur un nouveau challenge associé à chaque nouvelle tentative.

A l'issue du procédé d'authentification, le module d'authentification notifie typiquement le service de l'issue de l'authentification. Le service peut alors donner l'accès à l'utilisateur en fonction du résultat de l'authentification.

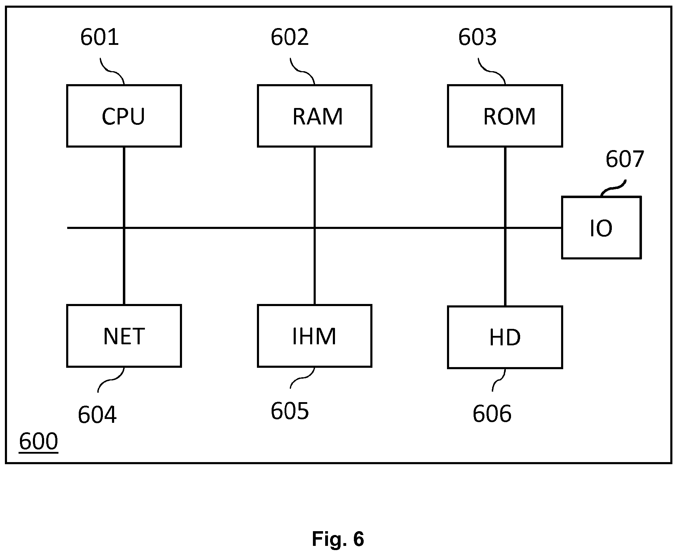

La **Figure 6** est un bloc-diagramme schématique d'un dispositif de traitement de l'information **600** pour la mise en œuvre d'un ou plusieurs modes de réalisation de l'invention. Le dispositif **600** de traitement de l'information peut être un périphérique tel qu'un micro-ordinateur, un poste de travail ou un terminal mobile de télécommunication. Le dispositif **600** comporte un bus de communication connecté à :
- une unité centrale de traitement **601,** tel qu'un microprocesseur, notée CPU;
- une mémoire à accès aléatoire **602,** notée RAM, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif peut être complétée par une mémoire RAM optionnelle connectée à un port d'extension, par exemple ;
- une mémoire morte **603,** notée ROM, pour stocker des programmes informatiques pour la mise en œuvre des modes de réalisation de l'invention ;
- une interface réseau **604** est normalement connectée à un réseau de communication sur lequel des données numériques à traiter sont transmis ou reçus. L'interface réseau **604** peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur **601** ;
- une interface utilisateur **605** pour recevoir des entrées d'un utilisateur ou pour afficher des informations à un utilisateur ;
- un dispositif de stockage **606** tel que décrit dans l'invention et noté HD;
- un module d'entrée/sortie **607** pour la réception / l'envoi de données depuis / vers des périphériques externes tels que disque dur, support de stockage amovible ou autres.

Le code exécutable peut être stocké dans une mémoire morte **603,** sur le dispositif de stockage **606** ou sur un support amovible numérique tel que par exemple un disque. Selon une variante, le code exécutable des programmes peut être reçu au moyen d'un réseau de communication, via l'interface réseau **604,** afin d'être stocké dans l'un des moyens de stockage du dispositif de communication **600,** tel que le dispositif de stockage **606,** avant d'être exécuté.

L'unité centrale de traitement **601** est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU **601** est capable d'exécuter des instructions de la mémoire RAM principale **602,** relatives à une application logicielle. Un tel logiciel, lorsqu'il est exécuté par le processeur **601,** provoque l'exécution des procédés décrits.

Dans ce mode de réalisation, l'appareil est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC).

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Procédé d'enrôlement d'un utilisateur auprès d'un service, par un module d'authentification exécuté sur un serveur, comprenant les étapes suivantes :
- détermination d'une convention permettant le calcul d'une réponse à partir d'un challenge par sélection aléatoire d'une pluralité de briques algorithmiques de base dans un ensemble de briques algorithmiques de base ;
- transmission de la convention à destination d'un terminal de l'utilisateur pour présentation à l'utilisateur ;
- enregistrement de la convention associée à un identifiant de l'utilisateur, ladite convention constituant un secret partagé entre l'utilisateur et le module d'authentification.

2. Procédé selon la revendication 1, **caractérisé en ce qu'**il comprend en outre une étape d'adaptation de la convention.

3. Procédé selon la revendication 2, **caractérisé en ce que** l'étape d'adaptation comprend une étape de :
- simplification de la convention initialement déterminée par réduction du nombre de briques algorithmiques de base.

4. Procédé selon la revendication 2, **caractérisé en ce que** l'étape d'adaptation comprend une étape de :
- complexification de la convention initialement déterminée par augmentation du nombre de briques algorithmiques de base.

5. Procédé selon l'une des revendications 3 ou 4, **caractérisé en ce que** l'étape de simplification ou de complexification comprend la sélection aléatoire de briques algorithmiques de base à retirer, respectivement ajouter, à la convention.

6. Procédé selon l'une des revendications 3 ou 4, **caractérisé en ce que** l'étape de simplification ou de complexification comprend la réception d'une sélection par l'utilisateur de briques algorithmiques de base à retirer, respectivement ajouter, à la convention.

7. Procédé selon l'une quelconque des revendications 1 à 6, **caractérisé en ce qu'**il comporte en outre au moins une étape de test de la convention déterminée.

8. Procédé selon la revendication 7, **caractérisé en ce que** l'étape de test comprend les étapes suivantes :
- génération d'un challenge compatible avec la convention ;
- transmission du challenge à destination d'un terminal de l'utilisateur ;
- réception d'une réponse au challenge reçue du terminal de l'utilisateur ;
- comparaison de la réponse reçue par rapport à une réponse calculée en appliquant la convention au challenge généré.

9. Procédé selon la revendication 7, **caractérisé en ce que** qu'il comprend en outre une étape de :
- simplification de la convention suite à un ou plusieurs échecs de l'étape de test.

10. Procédé selon la revendication 7, **caractérisé en ce que** qu'il comprend en outre une étape de :
- détermination d'une nouvelle convention suite à un ou plusieurs échecs de l'étape de test.

11. Procédé selon l'une des revendications 1 à 10, **caractérisé en ce que** les briques algorithmiques de base comprennent une première forme intelligible pour l'utilisateur et une seconde forme correspondant à un code exécutable par un dispositif de traitement de l'information.

12. Procédé selon l'une des revendications 1 à 11, **caractérisé en ce que** la convention enregistrée associée à un utilisateur est également associée à un identifiant de service.

13. Procédé d'authentification d'un utilisateur auprès d'un service, par un module d'authentification exécuté sur un serveur, comprenant les étapes suivantes :
- obtention d'une convention associée à l'utilisateur permettant le calcul d'une réponse à partir d'un challenge par sélection aléatoire d'une pluralité de briques algorithmiques de base dans un ensemble de briques algorithmiques de base, ladite convention constituant un secret partagé entre l'utilisateur et le module d'authentification ;
- génération d'un challenge compatible avec la convention ;
- transmission du challenge à destination d'un terminal de l'utilisateur ;
- réception d'une réponse au challenge reçue du terminal de l'utilisateur ;
- comparaison de la réponse reçue par rapport à une réponse calculée en appliquant la convention au challenge généré.

14. Procédé selon la revendication 13, **caractérisé en ce que** le challenge généré est différent de tous les challenges précédemment générés pour le même utilisateur.

15. Procédé selon l'une des revendications 13 ou 14, **caractérisé en ce que** le challenge est transmis directement au terminal de l'utilisateur.

16. Procédé selon l'une des revendications 13 ou 14, **caractérisé en ce que** le challenge est transmis à un service servant de relai entre le serveur et le terminal de l'utilisateur.

17. Dispositif de traitement de l'information **caractérisé en ce qu'**il comporte un processeur configuré pour exécuter un procédé d'enrôlement selon l'une des revendications 1 à 12.

18. Dispositif de traitement de l'information **caractérisé en ce qu'**il comporte un processeur configuré pour exécuter un procédé d'authentification selon l'une des revendications 13 à 16.

19. Programme d'ordinateur comprenant des instructions adaptées à la mise en oeuvre de chacune des étapes du procédé selon l'une quelconque des revendications 1 à 16 lorsque ledit programme est exécuté sur un ordinateur.

20. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 16.

## Patentansprüche

1. Verfahren zur Anmeldung eines Benutzers bei einem Dienst durch ein Authentifizierungsmodul, das auf einem Server ausgeführt wird, die folgenden Schritte umfassend:
- Bestimmung einer Konvention, die die Berechnung einer Antwort ausgehend von einer Abfrage durch zufällige Auswahl einer Vielzahl von grundlegenden algorithmischen Bausteinen in einer Reihe von grundlegenden algorithmischen Bausteinen ermöglicht;
- Übertragung der Konvention an ein Terminal des Benutzers, zur Präsentation für den Benutzer;
- Registrierung der Konvention, die einem Kennzeichen des Benutzers zugeordnet ist, wobei die Konvention ein Geheimnis darstellt, das zwischen dem Benutzer und dem Authentifizierungsmodul geteilt wird.

2. Verfahren nach Anspruch 1, **dadurch gekennzeichnet, dass** es ferner einen Schritt zur Anpassung der Konvention umfasst.

3. Verfahren nach Anspruch 2, **dadurch gekennzeichnet, dass** der Anpassungsschritt einen Schritt umfasst, der:
- Vereinfachung der ursprünglich bestimmten Konvention durch Verringerung der Anzahl der grundlegenden algorithmischen Bausteine.

4. Verfahren nach Anspruch 2, **dadurch gekennzeichnet, dass** der Anpassungsschritt einen Schritt umfasst, der:
- Komplexierung der ursprünglich bestimmten Konvention durch Erhöhung der Anzahl der grundlegenden algorithmischen Bausteine.

5. Verfahren nach einem der Ansprüche 3 oder 4, **dadurch gekennzeichnet, dass** der Vereinfachungs- oder Komplexierungsschritt die zufällige Auswahl von grundlegenden algorithmischen Bausteinen umfasst, die von der Konvention zu entnehmen beziehungsweise hinzuzufügen sind.

6. Verfahren nach einem der Ansprüche 3 oder 4, **dadurch gekennzeichnet, dass** der Vereinfachungs- oder Komplexierungsschritt den Empfang einer Auswahl von grundlegenden algorithmischen Bausteinen durch den Benutzer umfasst, die von der Konvention zu entnehmen beziehungsweise hinzuzufügen sind.

7. Verfahren nach einem der Ansprüche 1 bis 6, **dadurch gekennzeichnet, dass** es ferner mindestens einen Schritt der Prüfung der bestimmten Konvention beinhaltet.

8. Verfahren nach Anspruch 7, **dadurch gekennzeichnet, dass** der Prüfschritt die folgenden Schritte umfasst:
- Generierung einer Abfrage, die kompatibel ist mit der Konvention;
- Übertragung der Abfrage an ein Terminal des Benutzers;
- Empfang einer Antwort auf die Abfrage, die vom Terminal des Benutzers empfangen wurde;
- Vergleich der empfangenen Antwort mit einer Antwort, die durch Anwendung der Konvention auf die generierte Abfrage berechnet wurde.

9. Verfahren nach Anspruch 7, **dadurch gekennzeichnet, dass** es ferner einen Schritt umfasst, der:
- Vereinfachung der Konvention im Anschluss an einen oder mehrere Fehlschläge im Prüfschritt.

10. Verfahren nach Anspruch 7, **dadurch gekennzeichnet, dass** es ferner einen Schritt umfasst, der:
- Bestimmung einer neuen Konvention im Anschluss an einen oder mehrere Fehlschläge im Prüfschritt.

11. Verfahren nach einem der Ansprüche 1 bis 10, **dadurch gekennzeichnet, dass** die grundlegenden algorithmischen Bausteine eine erste für den Benutzer verständliche Form umfassen und eine zweite Form, die einem von einer Informationsverarbeitungsvorrichtung ausführbaren Code entspricht.

12. Verfahren nach einem der Ansprüche 1 bis 11, **dadurch gekennzeichnet, dass** die einem Benutzer zugeordnete registrierte Konvention auch einem Kennzeichen des Dienstes zugeordnet ist.

13. Verfahren zur Authentifizierung eines Benutzers bei einem Dienst durch ein Authentifizierungsmodul, das auf einem Server ausgeführt wird, die folgenden Schritte umfassend:
- Erlangung einer dem Benutzer zugeordneten Konvention, die die Berechnung einer Antwort ausgehend von einer Antwort ausgehend von einer Abfrage durch zufällige Auswahl einer Vielzahl von grundlegenden algorithmischen Bausteinen in einer Reihe von grundlegenden algorithmischen Bausteinen ermöglicht, wobei die Konvention ein Geheimnis darstellt, das zwischen dem Benutzer und dem Authentifizierungsmodul geteilt wird;
- Generierung einer Abfrage, die kompatibel ist mit der Konvention;
- Übertragung der Abfrage an ein Terminal des Benutzers;
- Empfang einer Antwort auf die Abfrage, die vom Terminal des Benutzers empfangen wurde;
- Vergleich der empfangenen Antwort mit einer Antwort, die durch Anwendung der Konvention auf die generierte Abfrage berechnet wurde.

14. Verfahren nach Anspruch 13, **dadurch gekennzeichnet, dass** sich die generierte Abfrage von allen Abfragen unterscheidet, die zuvor für denselben Benutzer generiert wurden.

15. Verfahren nach einem der Ansprüche 13 oder 14, **dadurch gekennzeichnet, dass** die Abfrage direkt an das Terminal des Benutzers übertragen wird.

16. Verfahren nach einem der Ansprüche 13 oder 14, **dadurch gekennzeichnet, dass** die Abfrage an einen Dienst übertragen wird, der als Vermittler zwischen dem Server und dem Terminal des Benutzers dient.

17. Informationsverarbeitungsvorrichtung, **dadurch gekennzeichnet, dass** sie einen Prozessor beinhaltet, der zum Ausführen eines Anmeldungsverfahrens nach einem der Ansprüche 1 bis 12 konfiguriert ist.

18. Informationsverarbeitungsvorrichtung, **dadurch gekennzeichnet, dass** sie einen Prozessor beinhaltet, der zum Ausführen eines Authentifizierungsverfahrens nach einem der Ansprüche 13 bis 16 konfiguriert ist.

19. Computerprogramm, Anweisungen umfassend, die für die Durchführung jeder der Schritte des Verfahrens nach einem der Ansprüche 1 bis 16 geeignet sind, wenn das Programm auf einem Computer ausgeführt wird.

20. Informationsspeichermittel, entfernbar oder nicht, teilweise oder vollständig lesbar durch einen Computer oder einen Mikroprozessor, Codeanweisungen eines Computerprogramms beinhaltend für die Ausführung jeder der Schritte des Verfahrens nach einem der Ansprüche 1 bis 16.

## Claims

1. Method for enrolling a user with a service, using an authentication module executed on a server, comprising the following steps:
- determining a convention making it possible to calculate a response from a challenge by random selection of a plurality of basic algorithmic blocks from a set of basic algorithmic blocks;
- transmitting the convention to a user terminal for presentation to the user;
- registering the convention associated with a user identifier, said convention constituting a secret shared between the user and the authentication module.

2. Method according to claim 1, **characterised in that** it also comprises a step of adapting the convention.

3. Method according to claim 2, **characterised in that** the adaptation step comprises a step of:
- simplifying the initially determined convention by reducing the number of basic algorithmic blocks.

4. Method according to claim 2, **characterised in that** the adaptation step comprises a step of:
- complexifying the initially determined convention by increasing the number of basic algorithmic blocks.

5. Method according to one of claims 3 or 4, **characterised in that** the simplification or complexification step comprises randomly selecting basic algorithmic blocks to be removed from, respectively added to, the convention.

6. Method according to one of claims 3 or 4, **characterised in that** the simplification or complexification step comprises receiving the user's selection of basic algorithmic blocks to be removed from, respectively added to, the convention.

7. Method according to any one of claims 1 to 6, **characterised in that** it also comprises at least one step of testing the determined convention.

8. Method according to claim 7, **characterised in that** the test step comprises the following steps:
- generating a challenge compatible with the convention;
- transmitting the challenge to a user terminal;
- receiving a response to the received challenge from the user terminal;
- comparing the received response with a response calculated by applying the convention to the generated challenge.

9. Method according to claim 7, **characterised in that** it also comprises a step of:
- simplifying the convention following one or more failures of the test step.

10. Method according to claim 7, **characterised in that** it also comprises a step of:
- determining a new convention following one or more failures of the test step.

11. Method according to one of claims 1 to 10, **characterised in that** the basic algorithmic blocks comprise a first form that is intelligible to the user and a second form corresponding to a code that can be executed by an information processing device.

12. Method according to one of claims 1 to 11, **characterised in that** the registered convention associated with a user is also associated with a service identifier.

13. Method for authenticating a user with a service, using an authentication module executed on a server, comprising the following steps:
- obtaining a convention associated with the user making it possible to calculate a response on the basis of a challenge by random selection of a plurality of basic algorithmic blocks from a set of basic algorithmic blocks, said convention constituting a secret shared between the user and the authentication module;
- generating a challenge compatible with the convention;
- transmitting the challenge to a user terminal;
- receiving a response to the received challenge from the user terminal;
- comparing the received response with a response calculated by applying the convention to the generated challenge.

14. Method according to claim 13, **characterised in that** the generated challenge is different from all of the previously generated challenges for the same user.

15. Method according to one of claims 13 or 14, **characterised in that** the challenge is transmitted directly to the user terminal.

16. Method according to one of claims 13 or 14, **characterised in that** the challenge is transmitted to a service acting as a proxy between the server and the user terminal.

17. Information processing device, **characterised in that** it comprises a processor configured to execute an enrolment method according to one of claims 1 to 12.

18. Information processing device, **characterised in that** it comprises a processor configured to execute an authentication method according to one of claims 13 to 16.

19. Computer program comprising instructions suitable for implementing each of the steps of the method according to any one of claims 1 to 16 when said program is executed on a computer.

20. Information storage means, removable or not, partially or totally readable by a computer or a microprocessor comprising code instructions of a computer program for executing each of the steps of the method according to any one of claims 1 to 16.
